# EUROPÄISCHE PATENTANMELDUNG

(11) **EP 1 382 719 A2**
(43) Veröffentlichungstag der Anmeldung: **21.01.2004**
(21) Anmeldenummer: 03012312.9
(22) Anmeldetag: 28.05.2003
(51) Int. Cl.: C23C 24/04, B05B 7/14

(54) **Verfahren und Vorrichtung zum Kaltgasspritzen**

(30) Priorität: 04.06.2002 DE 10224777
(71) Anmelder: Linde Aktiengesellschaft, 65189 Wiesbaden (DE)
(72) Erfinder: Heinrich, Peter, 82110 Germering (DE); Kreye, Heinrich, Prof. Dr., 22175 Hamburg (DE); Krömmer, Werner, 84034 Landshut (DE)
(74) Vertreter: Kasseckert, Rainer

(57) **Zusammenfassung**

Erfindungsgemäß wird das Trägergas, welches die Spritzpartikel beim Kaltgasspritzen beschleunigt, oder eine Komponente des Trägergases nach dem Kaltgasspritzprozess aufgefangen, gereinigt und gesammelt. Kaltgasspritzpistole (3) und Werkstück (5) befinden sich in einem geschlossenen Behälter (4), welchem das verbrauchte Trägergas entnommen und vorteilhafterweise das Helium in einer Helium-Rückgewinnungseinheit (9) wiedergewonnen wird. Die Erfindung ermöglicht den Einsatz von optimal wirkenden Trägergasen wie beispielsweise Helium oder heliumhaltigen Mischungen.

## Beschreibung

Die Erfindung betrifft ein Verfahren zur Herstellung einer Beschichtung auf einem Werkstück oder eines Formteils in einem Kaltgasspritzprozess, wobei ein Trägergas und pulverförmige Spritzpartikel in einer Kaltgas-Spritzpistole entspannt werden und die Spritzpartikel dabei auf Geschwindigkeiten von bis zu 2000 m/s gebracht werden.

Es ist bekannt, auf Werkstoffe unterschiedlichster Art Beschichtungen mittels thermischen Spritzens aufzubringen. Bekannte Verfahren hierfür sind beispielsweise Flammspritzen, Lichtbogenspritzen, Plasmaspritzen oder Hochgeschwindigkeits-Flammspritzen. In jüngerer Zeit wurde ein Verfahren entwickelt, das sog. Kaltgasspritzen, bei welchem die Spritzpartikel in einer Kaltgas-Spritzpistole in einem "kalten" Gasstrahl auf hohe Geschwindigkeiten beschleunigt werden. Die Beschichtung wird durch das Auftreffen der Partikel auf dem Werkstück mit hoher kinetischer Energie gebildet. Beim Aufprall bilden die Partikel, die in dem "kalten" Gasstrahl nicht schmelzen, eine dichte und fest haftende Schicht, wobei plastische Verformung und daraus resultierende lokale Wärmefreigabe für Kohäsion und Haftung der Spritzschicht auf dem Werkstück sorgen. Ein Aufheizen des Trägergasstrahls erwärmt die Partikel zur besseren plastischen Verformung beim Aufprall und erhöht die Strömungsgeschwindigkeit des Gases und somit auch die Partikelgeschwindigkeit. Die damit verbundene Gastemperatur kann bis zu 800 °C betragen, liegt aber deutlich unterhalb der Schmelztemperatur des Beschichtungswerkstoffs, so dass ein Schmelzen der Partikel im Gasstrahl nicht stattfindet. Eine Oxidation und/oder Phasenumwandlungen des Beschichtungswerkstoffes lassen sich somit weitgehend vermeiden. Die Spritzpartikel werden als Pulver zugegeben, indem die Partikel mit einem Hilfsgasstrom in den Hauptgasstrom gefördert werden. Das Pulver umfasst dabei üblicherweise Partikel mit einer Größe von 1 bis 50 µm. Die hohe kinetische Energie erhalten die Spritzpartikel bei der Gasentspannung. Im allgemeinen wird das Gas nach der Injektion der Spritzpartikel in den Hauptgasstrahl in einer Düse entspannt, wobei Trägergas und Spritzpartikel auf Geschwindigkeiten über Schallgeschwindigkeit beschleunigt werden. Aber auch eine Injektion der Spritzpartikel in den bereits beschleunigten Hauptgasstrahl wird praktiziert. Ein solches Verfahren und eine Vorrichtung zum Kaltgasspritzen sind in der europäischen Patentschrift EP 0 484 533 B1 im einzelnen beschrieben.

Als Trägergase werden im allgemeinen Stickstoff, Helium und Stickstoff-Helium-Gemische verwendet. Für Haupt- und Hilfsgasstrom kann dabei das gleiche Gas oder es können unterschiedliche Gase verwendet werden. Stickstoff, das am häufigsten verwendete Trägergas, eignet sich als inertes und preiswertes Gas gut für den Kaltgasspritzprozess. Luft hingegen kommt trotz seines hohen Stickstoffanteils aufgrund des Sauerstoffanteils nur für wenige Anwendungen in Betracht. Mit Helium als Trägergas werden, wie Grundlagenuntersuchungen zeigen, die höchsten Partikelgeschwindigkeiten erreicht. Da sehr große Mengen Trägergas benötigt werden, kommen in der Praxis jedoch nur Stickstoff-Helium-Gemische mit geringem Heliumanteil zum Einsatz.

Wirtschaftliche Gründe geben bei der Wahl des Trägergases aufgrund des außerordentlich hohen Trägergasverbrauchs den Ausschlag. So liegt der Verbrauch an Trägergas beim Kaltgasspritzen zwischen 40 und 150 m³/h. Der Gasverbrauch richtet sich dabei nach dem verwendeten Trägergas für Haupt- und Hilfsgasstrom und dem Material der Spritzpartikel. Versuche mit Helium als Trägergas haben gezeigt, dass, um 3 kg Spritzmaterial (z.B. McrAIY) zu verspritzen, ein Bündel Helium mit 110 m³ notwendig ist. Bei der Wahl des Trägergases stehen folglich wirtschaftliche Aspekte im Vordergrund, welche den Einsatz von verfahrenstechnisch optimalen Trägergasen nicht zulassen.

Der vorliegenden Erfindung liegt daher die Aufgabe zugrunde, ein Verfahren anzugeben, welches die Auswahl eines für den Kaltgasspritzprozess optimalen Trägergases für Haupt- und Hilfsgasstrom erlaubt und das Verfahren des Kaltgasspritzens verbessert.

Die Aufgabe wird erfindungsgemäß dadurch gelöst, dass das Trägergas oder eine Komponente des Trägergases nach dem Kaltgasspritzprozess aufgefangen, gereinigt und gesammelt wird. Um das Trägergas auffangen zu können findet das Kaltgasspritzen vorteilhafterweise in einem geschlossenen Behälter statt, in welchen das Trägergas beim Spritzen entweicht. Aus diesem Behälter wird das verbrauchte Trägergas entnommen und gereinigt. Eine andere Möglichkeit das verbrauchte Trägergas aufzufangen ist es, in einer Abzugskammer zu spritzen und die Abzugsgas der Reinigung zuzuführen. Bei der Reinigung werden zumindest die freien Spritzpartikel aus dem Trägergas entfernt. Darüber hinaus ist es vorteilhaft, das Trägergas von Verunreinigungen, welche beispielsweise durch ein Vermischen mit Luft eingebracht werden, zu befreien. Danach wird das gereinigte Trägergas in einem geeigneten Behältnis gesammelt. Wird nur eine Komponente des Trägergases gesammelt, werden bei der Reinigung des Gases nicht nur die gasförmigen Verunreinigungen sondern auch die unerwünschten Gaskomponenten aus dem Trägergas gefiltert. Lediglich die gewünschte Gaskomponente gelangt in das Sammelbehältnis. Durch das erfindungsgemäße Verfahren wird es möglich, das Trägergas nach seinen Eigenschaften und nicht nach seiner wirtschaftlichen Verfügbarkeit auszuwählen, da das verbrauchte Trägergas wieder verwendet werden kann und nicht, wie beim konventionellen Kaltgasspritzprozess, in die Umgebung entweicht.

Das gereinigte Trägergas/die Gaskomponente wird vorteilhafterweise dem Kaltgasspritzprozess wieder zugeführt; jedoch ist es auch möglich, dass das gereinigte Trägergas/Gaskomponente einer anderen Verwendung zugeführt wird. Die Reinigung des verbrauchten Trägergases umfasst dabei zumindest die Entfernung der freien Spritzpartikel aus dem Trägergas. In der Regel werden jedoch zuerst die freien Spritzpartikel aus dem Trägergas entfernt und danach die gasförmigen Verunreinigungen aus dem Trägergas gefiltert, bevor das gereinigte Trägergas in ein Sammelbehältnis zur Zwischenspeicherung gelangt und dem Kaltgasspritzprozess wieder zugeführt wird. Soll nur eine Komponente des Trägergases wiederverwendet werden, wird dieser Bestandteil, nachdem die freien Spritzpartikel entfernt wurden, aus dem Trägergas herausgelöst. Die Gaskomponente wird zwischengespeichert und schließlich dem Kaltgasspritzprozess wieder zugeführt.

Das erfindungsgemäße Verfahren ist prinzipiell mit allen Gasen und Gasmischungen sowie Luft durchführbar. Als Gase eignen sich besonders die Edelgase und inerte Gase sowie deren Gemische. Insbesondere werden Helium, Argon und Stickstoff sowie Gemische aus diesen Gasen verwendet. Mit besonderem Vorteil ist Helium im Trägergas enthalten, vorzugsweise sind mindestens 20 Vol.-% Helium, besonders bevorzugt sind zwischen 30 und 80 Vol.-% Helium enthalten. Als vorteilhaft haben sich dabei Mischungen aus Helium und Stickstoff sowie aus Helium und Argon erwiesen. Mit Helium und heliumhaltigen Gemischen als Trägergas werden sehr hohe Partikelgeschwindigkeiten erreicht. Hohe Spritzpartikelgeschwindigkeiten garantieren dichte und festhaftende Beschichtungen und damit qualitativ hochwertige Ergebnisse beim Kaltgasspritzen. Aufgrund des sehr hohen Gasverbrauchs beim Kaltgasspritzen und des hohen Preises von Helium können die Vorteile von Helium und heliumhaltigen Trägergasen beim Kaltgasspritzen nur mit dem erfindungsgemäßen Verfahren genutzt werden. Insbesondere die Verwendung von nur Helium als Trägergas wird erst mit dem erfindungsgemäßen Verfahren möglich, da die notwendigen großen Heliummengen nur mit dem erfindungsgemäßen Verfahren bereitgestellt werden können. Auch ist die Durchführung für die Rückgewinnung leichter, wenn nur Helium ohne Zumischung einer weiteren Komponente verwendet wird, da dann bei der Rückgewinnung nur die Eigenschaften des Heliums berücksichtigt werden müssen.

In einer vorteilhaften Ausgestaltung des erfindungsgemäßen Verfahrens wird speziell das Helium wieder gewonnen. Dazu findet die Reinigung des verbrauchten Trägergases von gasförmigen Verunreinigungen in einer Helium-Rückgewinnungseinheit statt, welche sowohl die Verunreinigungen als auch die übrigen Bestandteile des Trägergases von dem Helium abspaltet. Das Helium, welches mit hoher Reinheit wiedergewonnen wird, gelangt dann in das Sammelbehältnis. Obwohl eine Helium-Rückgewinnung, welche vorteilhafterweise mit der Membrantechnik arbeitet, sehr aufwändig und teuer ist, ermöglicht die Rückgewinnung des Heliums seinen Einsatz beim Kaltgasspritzen. Vor allem bei Großserien wird es mit dem erfindungsgemäßen Verfahren möglich Helium einzusetzen, da sich hier der Aufwand für die Helium-Rückgewinnung besonders lohnt.

In Weiterbildung der Erfindung wird der Kaltgasspritzprozess im Niederdruck bei Werten unterhalb von 800 mbar (80 kPa) ausgeführt. Dadurch erniedrigt sich der Verbrauch an Trägergas und die Spritzpartikelgeschwindigkeit erhöht sich. Dies erhöht die Wirtschaftlichkeit des erfindungsgemäßen Verfahrens. Dies ist, insbesondere wenn Helium im Trägergas enthalten ist, von Vorteil. Unter den Vakuumbedingungen, bei welchen der Spritzprozess durchgeführt wird, ist der Luftwiderstand, welcher die Spritzpartikel nach dem Austreten aus der Kaltgas-Spritzpistole bis zum Erreichen des Spritzgutes bremst, sehr gering. Folglich bleibt die hohe Spritzpartikelgeschwindigkeit, welche beim Austreten aus der Spritzpistole vorherrscht, bis zum Auftreffen auf das Werkstück erhalten. Aufgrund der hohen Partikelgeschwindigkeit wiederum ist die kinetische Energie der Partikel höher und ihre plastische Verformung beim Aufprall stärker. Dadurch entstehen sehr dichte und festhaftende Schichten. Auch der Abstand des Spritzgutes von der Spritzpistole kann, da die Spritzpartikel auf diesem Weg nicht durch den Luftwiderstand abgebremst werden, größer gewählt werden als unter Atmosphäre. Dies hat den Vorteil, dass alle Geometrien an Formteilen und Werkstücken beschichtet werden können. Auch die Verwendung eines breiten Spritzstrahls wird unter Niederdruckbedingungen möglich. Das Erhaltenbleiben der hohen Geschwindigkeiten der Partikel im Niederdruck bis hin zum Werkstück zeigt sich besonders ausgeprägt, wenn Werkstück und Spritzpistole einen Abstand von mehr als 60 mm aufweisen. Dies ist darauf zurückzuführen, dass die Geschwindigkeit der Partikel direkt nach dem Verlassen der Spritzpistole noch zunimmt, bevor sich die Abbremsung durch die Umgebungsluft bemerkbar macht. Liegen die Spritzabstände über 60 mm zeigen sich die Vorteile des Niederdrucks und das damit verbundene Fehlen der Abbremsung deutlich. Spritzabständen von mehr als 60 mm erweisen sich als vorteilhaft, wenn große Werkstücke oder sehr viele Werkstücke beschichtet werden, da auf dem längeren Weg zum Werkstück hin der Spritzstrahl weiter auffächert und der aufgefächerte Strahl eine im Vergleich zum gebündelten Strahl großflächigere Beschichtung ermöglicht. Femer können, wenn der Spritzabstand so groß gewählt wird, auch Werkstücke mit unebener Oberfläche, bei denen der Abstand zwischen Spritzpistole und Werkstoffoberfläche örtlich stark variiert, ohne Probleme beschichtet werden.

In einer vorteilhaften Ausgestaltung der Erfindung beträgt der Druck in der Vakuumkammer zwischen 1 und 500 mbar (0,1 bis 50 kPa), vorzugsweise 20 bis 100 mbar (2 bis 10 kPa) liegt. Dieser Druckbereich wird mit handelsüblichen Vakuumpumpen problemlos erreicht.

In einer vorteilhaften Weiterbildung der Erfindung wird es möglich, Spritzpartikel mit einer Korngröße von bis zu 150 µm zu verwenden. Größere Spritzpartikel müssen auf höhere Partikelgeschwindigkeiten beschleunigt werden als kleinere Partikel bis ihre kinetische Energie ausreicht, um auf dem zu beschichtenden Werkstück haften zu bleiben. Bisher übliche Spritzpartikel weisen Korngrößen im Bereich von 5 bis 25 µm, teilweise auch bis 50 µm auf und werden meist in Luft oder Stickstoff beschleunigt. Mit dem erfindungsgemäßen Verfahren wird es nun möglich auch Helium oder heliumhaltige Gasmischungen als Trägergas im größeren Umfang zu verwenden. Mit Helium werden deutlich höhere Spritzpartikelgeschwindigkeiten erzielt, wodurch auch größere Spritzpartikel mit einer Korngröße im Bereich von 80 bis 150 µm genügend stark beschleunigt werden, so dass sie am Werkstück gut haften. Größere Spritzpartikel wiederum haben gegenüber kleineren Spritzpartikeln den Vorteil, dass sie weniger leicht in der Düse der Spritzpistole anbacken und diese verstopfen. Da größere Spritzpartikel im Vergleich zu kleineren Spritzpartikel deutlich kostengünstiger sind, erhöht sich die Wirtschaftlichkeit des erfindungsgemäßen Verfahrens.

Die Aufgabe wird hinsichtlich der Vorrichtung dadurch gelöst, dass die Kaltgas-Spritzpistole und das zu beschichtende Werkstück / das Formteil in einem geschlossenen Behälter angeordnet sind. Damit sammelt sich das Trägergas nach dem Kaltgasspritzprozess in dem geschlossenen Behältnis. Das verbrauchte Trägergas gelangt nicht in die Umgebung, sondern es wird einem Reinigungs- und Wiederverwertungsprozess zugänglich. Die erfindungsgemäße Vorrichtung erlaubt es somit, das Trägergas nach technischen Kriterien und nicht nach wirtschaftlichen Aspekten auszuwählen.

Die Erfindung sowie weitere Einzelheiten der Erfindung werden im Folgenden anhand eines, in der Zeichnung dargestellten, Ausführungsbeispiels näher erläutert:

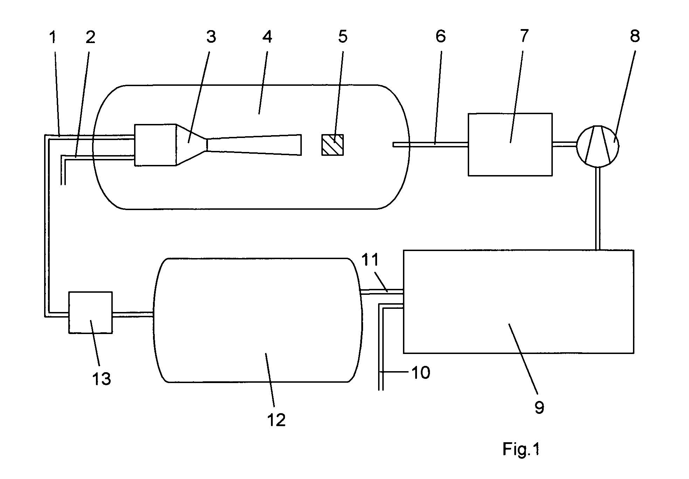

Die Figur 1 zeigt eine erfindungsgemäße Vorrichtung zum Kaltgasspritzen.

Figur 1 umfasst eine Kaltgasspritzpistole 3, einen geschlossenen Behälter 4, ein Werkstück 5, Zuleitungen 1, 2, 6, 10 und 11, einen Partikelfilter 7 und eine Vakuumpumpe 8, sowie eine Rückgewinnungseinheit 9, einen Zwischenspeicher 12 und einen Mischer 13. Über die Gaszuleitung 1 gelangt der Hauptgasstrom, beispielsweise eine Helium-Stickstoffmischung mit 80 Vol.-% Helium, und über die Zuleitung 2 die Spritzpartikel in dem Hilfsgasstrom in die Kaltgas-Spritzpistole 3, welche sich in den geschlossenen Behälter 4 befindet. Die Zuleitungen 1 und 2 werden dazu in den geschlossenen Behälter 4 hineingeführt, in welcher sich sowohl die Kaltgas-Spritzpistole 3 als auch das Werkstück 5 befindet. Der gesamte Kaltgasspritzprozess findet somit in dem geschlossenen Behälter 4 statt. Das Trägergas, welches beim Kaltgasspritzen zusammen mit den Spritzpartikeln aus der Spritzpistole 3 spritzt und die Spritzpartikel zum Werkstück trägt, wird nach dem Kaltgasspritzprozess in dem geschlossenen Behälter aufgefangen. Von dort wird das verbrauchte Trägergas mit der Vakuumpumpe 8 über die Leitung 6 abgeführt. Vor die Vakuumpumpe 8 ist der Partikelfilter 7 angebracht, welcher freie Spritzpartikel aus dem verbrauchten Trägergas entfernt. Nach der Vakuumpumpe 8 gelangt das Trägergas in die Rückgewinnungseinheit 9. Die Rückgewinnungseinheit 9, welche mit der Membrantechnik arbeitet, trennt das Helium von dem Stickstoff und Verunreinigungen ab. Helium wird dabei mit einer Reinheit von mehr als 99 % gewonnen. Die Verunreinigungen werden über die Leitung 10 in die Umgebung abgegeben. Das recycelte Helium gelangt über die Leitung 11 in den Zwischenspeicher 12, wo es gesammelt wird, bevor es in dem Mischer 13 mit den übrigen Trägergaskomponenten gemischt und dem Kaltgasspritzprozess wieder zugeführt wird.

## Patentansprüche

1. Verfahren zur Herstellung einer Beschichtung auf einem Werkstück oder eines Formteils in einem Kaltgasspritzprozess, wobei ein Trägergas in einer Kaltgas-Spritzpistole entspannt wird und dabei Spritzpartikel auf Geschwindigkeiten von bis zu 2000 m/s beschleunigt und auf das Werkstück/Formteil aufgebracht werden, **dadurch gekennzeichnet, dass** das Trägergas oder eine Komponente des Trägergases nach dem Kaltgasspritzprozess aufgefangen, gereinigt und gesammelt wird.

2. Verfahren nach Anspruch 1, **dadurch gekennzeichnet, dass** das Trägergas oder die wiedergewonnene Komponente des Trägergases dem Kaltgasspritzprozess wieder zugeführt wird.

3. Verfahren nach Anspruch 1 oder 2, **dadurch gekennzeichnet, dass** im Trägergas Helium, vorzugsweise mindestens 20 Vol.-% Helium, besonders bevorzugt 30 bis 80 Vol.-% Helium enthalten ist.

4. Verfahren nach Anspruch 3, **dadurch gekennzeichnet, dass** das Helium im Trägergas mit einer Heliumrückgewinnungseinheit wiedergewonnen wird.

5. Verfahren nach einem der Ansprüche 1 bis 4, **dadurch gekennzeichnet, dass** in der Kaltgasspritzprozess im Niederdruck bei Werten unterhalb von 800 mbar (80 kPa) ausgeführt wird.

6. Verfahren nach Anspruch 5, **dadurch gekennzeichnet, dass** der Kaltgasspritzprozess bei einem Druck zwischen 1 und 500 mbar (0,1 bis 50 kPa), vorzugsweise 20 bis 100 mbar (2 bis 10 kPa) liegt.

7. Verfahren nach einem der Ansprüche 1 bis 6, **dadurch gekennzeichnet, dass** Spritzpartikel mit einer Korngröße von bis zu 150 µm verwendet werden.

8. Vorrichtung zur Herstellung einer Beschichtung auf einem Werkstück oder eines Formteils in einem Kaltgasspritzprozess umfassend eine Kaltgas-Spritzpistole (3) und eine Werkzeughalterung für das zu beschichtende Werkstück / das Formteil (5), **dadurch gekennzeichnet, dass** die Kaltgas-Spritzpistole (3) und das zu beschichtende Werkstück / das Formteil (5) in einem geschlossenen Behälter (4) angeordnet sind.
